(19) Europäisches Patentamt
European Patent Office
Office européen des brevets

(11) Publication number: 0 187 999
A2

(12) # EUROPEAN PATENT APPLICATION

(21) Application number: 85116499.6

(22) Date of filing: 23.12.85

(51) Int. Cl.[4]: C 08 L 69/00
C 08 L 67/02, C 08 G 63/64

(30) Priority: 02.01.85 US 688246

(43) Date of publication of application:
23.07.86 Bulletin 86/30

(84) Designated Contracting States:
DE FR GB IT NL

(71) Applicant: GENERAL ELECTRIC COMPANY
1 River Road
Schenectady New York 12305(US)

(72) Inventor: Miller, Kenneth Frederick
1612 Hawthorne Drive
Mt. Vernon Indiana 47620(US)

(72) Inventor: Burzminski, Michael Joseph
229 Bayer Drive
Evansville Indiana 47712(US)

(74) Representative: Catherine, Alain et al,
General Electric - Deutschland Munich Patent Operations
Frauenstrasse 32
D-8000 München 5(DE)

(54) **Copolyestercarbonate composition.**

(57) Copolyester-carbonate resin composition exhibiting improved processability comprising, in physical admixture:

(i) at least one high molecular weight thermoplastic aromatic copolyester-carbonate resin wherein the major portion of the ester content thereof is comprised of isophthalate moieties; and

(ii) an amount effective to improve the processability of said copolyester-carbonate resin of at least one high molecular weight thermoplastic aromatic carbonate copolymer derived from a carbonate precursor, at least one dihydric phenol, and at least one di(hydroxyaryl) sulfone.

EP 0 187 999 A2

Croydon Printing Company Ltd.

# COPOLYESTER-CARBONATE COMPOSITION

## BACKGROUND OF THE INVENTION

Copolyester-carbonate resins are well known thermoplastic materials which, due to their many advantageous properties, find use as thermoplastic engineering materials. The copolyester-carbonate resin may be conveniently propared by the reaction of a dihydric phenol, a carbonate precursor, and an ester precursor. These resins exhibit, for example, excellent properties of toughness, flexibility, impact strength, and thermal resistance. However, conventional copolyester-carbonate resins, due to their relatively high melt viscosities, are generally relatively difficult to process.

The problem of providing copolyester-carbonate resins exhibiting imporved processability has been met by workers in the art by adding various types of additives to the copolyester-carbonate resins which improve the processability of these resins. The addition of these additives, while generally being effective in improving their processability has the disadvantage of sometimes adversely affecting some of the other advantageous properties of copolyester-carbonate resins, particularly their heat resistance. It would thus be very advantageous if copolyester-carbonate resins could be provided which retained, to a substantial degree, substantially most of their other advantageous properties, particularly their high heat resistance, and also exhibited improved processability.

It is, therefore, an object of the instant invention to provide copolyester-carbonate resins exhibiting improved porcessability and high heat resistance.

SUMMARY OF THE INVENTION

In accordance with the instant invention there are provided copolyester-carbonate resin compositions exhibiting improved processability and high heat resistance comprised of, in physical admixture:

(i) at least one high molecular weight thermoplastic aromatic copolyester-carbonate resin, the major portion of the ester component of said resin being isophthalate; and

(ii) an amount effective to improve the processability of said copolyester-carbonate resin of at least one carbonate copolymer derived from a carbonate precursor, at least one dihydric phenol, and a di (hydroxyaryl)sulfone represented by the general formula

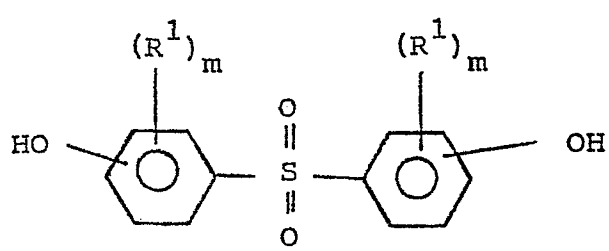

wherein $R^1$ is independently selected from halogen radicals and monovalent hydrocarbon radicals, and m is an integer having a value of from 0 to 4 inclusive.

DESCRIPTION OF THE INVENTION

The instant invention is directed to copolyester-carbonate resins exhibiting good resistance to stress crazing and cracking, improved processability, and good heat resistance. More particularly the instant invention is directed to blends of particular copolyester-carbonate resins and particular carbonate copolymers. The instant blends are comprised of, in physical admixture:

(i) at least one high molecular weight thermoplastic aromatic copolyester-carbonate resin, the major portion of the ester component of said resin being isophthalate; and

(ii) an amount effective to improve the processability of said copolyester-carbonate resin of a high molecular weight thermoplastic aromatic carbonate copolymer derived from a carbonate precursor, at least one dihydric phenol, and a di(hydroxyaryl)sulfone.

Briefly stated the high molecular weight thermoplastic aromatic copolyester-carbonate resins comprise recurring carbonate groups, carboxylate groups, and aromatic carbocyclic groups in the polymer chain in which at least some of the carbonate groups and at least some of the carboxylate groups are bonded directly to the ring carbon atoms of the aromatic carbocyclic groups.

These copolyester-carbonates contain ester bonds and carbonate bonds in the polymer chain, wherein the amount of ester bonds (ester content)

is in the range of from about 25 to about 90 mole percent, preferably from about 35 to about 80 mole percent ester bonds (ester content). For example, 5 moles of bisphenol-A reacting completely with 4 moles of isophthaloyl dichloride and 1 mole of phosgene would give a copolyester-carbonate of 80 mole percent ester bonds (ester content). The ester content of this copolyester-carbonate would be comprised of 100 mole percent of the residue of isophthaloyl dichloride.

The copolyester-carbonates of the instant invention, as well as methods for their preparation, are disclosed, inter alia, in U.S. Patent Nos. 3,169,121, 4,238,596, 4,456,820, and 4,238,597, all of which are incorporated herein by reference.

The copolyester-carbonates may be prepared by a variety of methods including melt polymerization, transesterification, and the interfacial polymerization processes.

These copolyester-carbonates may be readily prepared by the reaction of (a) at least one dihydric phenol; (b) a carbonate precursor; and (c) at least one ester precursor, the major portion of said ester precursor being the isophthlate precursor.

The dihydric phenols useful in the preparation of the instant copolyester-carbonates may be represented by the general formula

I. 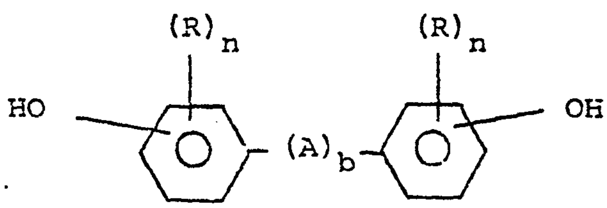

wherein:

R is independently selected from halogen and monovalent hydrocarbon radicals;

A is selected from divalent hydrocarbon radicals, -O-, and $-\overset{O}{\overset{\|}{C}}-$;

n is independently selected from integers having a value of from 0 to 4 inclusive; and

b is either zero or one.

The monovalent hydrocarbon radicals represented by R in Formula I include the alkyl, cycloalkyl, aryl, aralkyl, and alkaryl radicals. Preferred alkyl radicals are those containing from 1 to about 10 carbon atoms. Preferred cycloalkyl radicals are those containing from 4 to about 8 ring carbon atoms. Preferred aryl radicals are those containing from 6 to 12 ring carbon atoms, i.e., phenyl, naphthyl and biphenyl. Preferred aralkyl and alkaryl radicals are those containing from 7 to about 14 carbon atoms.

The preferred halogen radicals represented by R are chlorine and bromine.

The divalent hydrocarbon radicals represented by A include alkylene, alkylidene, cycloalkylene, and cycloalkylidene radicals. Preferred alkylene radicals

are those containing from 2 to about 20 carbon atoms. The preferred alkylidene radicals are those containing from 1 to about 10 carbon atoms. The preferred cycloalkylene and cycloalkylidene radicals are those containing from 4 to about 16 ring carbon atoms.

Preferred dihydric phenols of Formula I are the 4,4'-bisphenols, particularly those wherein A is a divalent hydrocarbon radicals and b is one.

Some illustrative non-limiting examples of dihydric phenols falling within the scope of Formula I include:

2,2-bis(4-hydroxyphenyl)propane (bisphenol-A);
1,1-bis(4-hydroxyphenyl)propane;
1,5-bis(4-hydroxyphenyl)pentane;
1,1-bis(4-hydroxyphenyl)decane;
2,2-bis(3,5-dimethyl-4-hydroxyphenyl)propane;
2,2-bis(3,5-dibromo-4-hydroxyphenyl)propane;
1,1-bis(4-hydroxyphenyl)cyclohexane;
1,1-bis(3,5-dimethyl-4-hydroxyphenyl)cyclohexane;
2,2-bis(3-methyl-5-chloro-4-hydroxyphenyl)propane;
1,3-bis(4-hydroxyphenyl)propane;
p,p'-dihydroxydiphenyl; and
3,3-(4-hydroxyphenyl)pentane.

Other useful dihydric phenols are disclosed in U.S. Patent Nos. 3,169,121, 2,999,835, 3,027,365, 3,334,154, 3,035,021 and 4,111,910, all of which are incorporated herein by reference.

It is, of course, possible to employ a mixture of two or more different dihydric phenols in the preparation of the instant copolyester-carbonates.

The carbonate precursor may be a carbonyl halide, a carbonate ester, or a bishaloformate. The carbonyl halides which may be employed herein are carbonyl bromide, carbonyl chloride, or mixtures thereof. Typical carbonate esters which may be used are diphenyl carbonate; di(halophenyl)carbonates such as di(chlorophenyl)carbonate, di(bromophenyl) carbonate, di(trichlorophenyl)carbonate, etc.; di (alkylphenyl)carbonates such as di(tolyl)carbonate, etc.; phenyl toyl carbonate; chlorophenyl chloronaphthyl carbonate; etc., or mixtures thereof. The bishaloformates suitable for use herein include the bishaloformates of dihydric phenols such as the bischloroformates of hydroquinone, bischloroformate of bisphenol-A, and the like; or bishaloformates of glycols such as the bischloroformates of ethylene glycol, polyethylene glycol, neopentyl glycol, and the like. The preferred carbonate precursor is phosgene, also known as carbonyl chloride.

The ester precursor is such so as to provide a copolyester-carbonate wherein the major portion of the ester component is comprised of isophthalate moieties. Generally, the ester component of the copolyester-carbonate resin contains from about 60 to 100 mole percent isophthalate moieties, preferably from about 70 to 100 mole percent isophthalate moieties, more preferably from about 80 to 100 mole percent isophthalate moieties, and most preferably from about 90 to 100 mole percent isophthalate moieties. While the ester component

may be comprised of 100 mole percent isophthalate moieties, it is usually quite useful if the ester component contains at least about 2 mole percent other ester moities such as, for example, terephthalate moities.

The ester precursor is thus generally comprised of from about 60 to 100 mole percent isophthalate precursor, preferably from about 70 to 100 mole percent isophthalate precursor, more preferably from about 80 to 100 mole percent isophthalate precursor, and most preferably from about 90 to 100 mole percent isophthalate precursor. The isophthalate precursor may be isophthalic acid or an ester forming reactive derivative thereof such as, for example, isophthaloyl dihalide such as isohthaloyl dichloride. It is preferred that the ester precursor be the ester forming reactive derivative of the isophthalic acid. If a copolyester-carbonate resin containing an ester component comprised of at least about 2 mole percent of an ester other than isophthalate is desired then the ester precursor will comprise a mixture of an isophthalate precursor and at least one of a difunctional carboxylic or an ester forming reactive derivative thereof other than isophthalic acid. Some of these difunctional carboxylic acids are disclosed in U.S. Patent 3,169,121, which is incorporated herein by reference.

A particularly useful ester precursor of this type is a terephthalate precursor, i.e., terephthalic acid or an ester forming reactive derivative thereof.

Particularly useful ester precursors are those containing at least about 60 mole percent isophthaloyl dihalide, preferably isophthaloyl dichloride, preferably at least about 70 mole percent isophthaloyl dihalide, more preferably at least about 80 mole percent isophthaloyl dihalide, and most preferably at least about 90 mole percent isophthaloyl dihalide. Preferred ester precursors of this type contain from about 2 to about 15 mole percent of terephthaloyl dihalide, preferably terephthaloyl dichloride, preferably from about 2 to about 10 mole percent terephthaloyl dihalide, and more preferably from about 3 to about 9 mole percent terephthaloyl dihalide.

Particularly useful copolyester-carbonates are those containing from about 70 to about 80 mole percent ester content, said ester content being comprised of at least about 90 mole percent isophthalate. Preferred copolyester-carbonates of this type have an ester content comprised of from about 90 to about 98 mole percent isophthalate and from about 2 to about 10 mole percent terephthalate. In these resins the carbonate precursor is preferably phosgene and the dihydric phenol is preferably bisphenol-A. These types of resins are disclosed in U.S. Patent 4,456,820, incorporated herein by reference.

One method for preparing the copolyester-carbonates of this invention is the interfacial polymerization process using an aqueous caustic solution, an organic water immiscible solvent such as methylene chloride, a catalyst, and a molecular weight regulator.

The catalysts which may be employed are any of the well known catalysts that catalyze the copolyester-carbonate forming reaction. These catalysts include, but are not limited to, tertiary

amines such as triethylamine, tripropyl amine, N,N-dimethylaniline, quaternary ammonium compounds, and quaternary phosphonium compounds.

The molecular weight regulators are any of the known compounds that regulate the molecular weight of the copolyester-carbonate by a chain terminating mechanism. These compounds include, but are not limited to, phenol, tertiarybutyl phenol, and chroman-I.

The instant copolyester-carbonates will have a weight average molecular weight in the range of from about 20,000 to about 200,000, and preferably from about 25,000 to about 100,000.

Also included within the scope of the instant invention are the thermoplastic randomly branched high molecular weight aromatic copolyester-carbonates.

These randomly branched copolyester-carbonates are derived from at least one dihydric phenol of Formula I, a carbonate precursor, an ester precursor, and a minor amount of a branching agent. The branching agents are well known compounds and are generally aromatic compounds containing at least three functional groups which may be hydroxyl, carboxyl, carboxylic anhydride, haloformyl, or mixtures thereof. Some illustrative non-limiting examples of these polyfunctional organic compounds include trimellitic anhydride, trimellitic acid, trimellityl trichloride, 4-chloroformyl phthalic anhydride, pyrommellitic acid, pyromellitic dianhydride, mellitic acid, mellitic anhydride, trimesic acid, benzophenonetetracarboxylic acid, and benzophenonetetracarboxylic anhydride.

Also included herein are blends of linear and branched copolyester-carbonates.

It is critical to the instant invention that the ester component of the instant copolyester-carbonates be comprised of a major portion of isophthalate. It is the presence of this isophthalate, in major amounts, that renders the instant copolyester-carbonates more resistant to stress crazing and cracking. Particulary useful copolyester-carbonates of this type are those containing at least 90 mole percent of isophthalate as the ester component.

The polycarbonates which are blended with the copolyester-carbonates described hereinafore are carbonate copolymers derived from a carbonate precursor, at least one dihydric phenol of Formula I, and at least one di(hydroxyaryl)sulfone represented by the general formula

II. 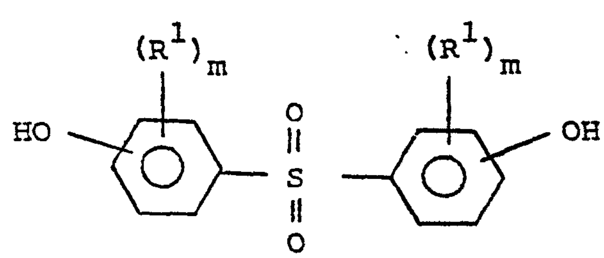

wherein:

$R^1$ is independently selected from halogen radicals and monovalent hydrocarbon radicals; and

m is independently selected from integers having a value of from 0 to 4 inclusive.

The halogen radicals and monovalent hydrocarbon

radicals represented by $R^1$ are the same as those defined for R hereinafore.

The preferred di(hydroxyaryl)sulfones of Formula II are those wherein $R^1$ is independently selected from alkyl radicals, preferably the lower alkyl radicals containing from 1 to about 4 carbon atoms, with the methyl radical being the preferred lower alkyl radical. Particularly useful di(hydroxyaryl) sulfones of this type are those wherein each m is two. The preferred di(hydroxyaryl)sulfones of Formula II are the dixylenol sulfones, with bis(3,5-dimethyl-4-hydroxyphenyl)sulfone being preferred.

These polycarbonates generally contain from about 20 to about 80 mole percent of a residue of the di(hydroxyaryl)sulfone of Formula II and from about 80 to about 20 mole percent of a residue of a dihydric phenol of Formula I; preferably from about 30 to about 70 mole percent of said di(hydroxyaryl) sulfone residue and from about 70 to about 30 mole percent of said dihydric phenol residue; and more preferably from about 40 to about 60 mole percent of said di(hydroxyaryl)sulfone residue and from 60 to about 40 mole percent of said dihydric phenol residue. Mole percent of di(hydroxyaryl) sulfone residue and dihydric phenol residue is measured as the amount of said residues present in the total amount of the residues of said di(hydroxyaryl) sulfone and residues of said dihydric phenol present in the carbonate polymer. These types of carbonate copolymers are disclosed in U.S. Patent 3,737,409, which is hereby incorporated herein by reference.

A particularly useful carbonate copolymer of this type is one derived from phosgene, bisphenol-A, and bis(3,5-dimethyl-4-hydroxyphenyl)sulfone. Preferred carbonate copolymers of this type are those containing from about 40 to about 60 mole percent of the residue of the di(hydroxyaryl)sulone of Formula II and from about 60 to about 40 mole percent of the residue of bisphenol-A.

The instant carbonate copolymers have a weight average molecular weight in the range of from about 20,000 to about 200,000, preferably from about 25,000 to about 100,000.

The amount of the carbonate copolymer component (ii) present in the instant compositions is an amount effective to positively upgrade the processability of the copolyester-carbonate resins, i.e., increase the melt flow rate and decrease the melt viscosity. Greater than these amounts may be employed so long as the properties desired for a particular application of these compositions are substantially maintained. That is to say, the amount of the polycarbonate component (ii) present is an amount effective to improve the processability of the copolyester-carbonate resin but insufficient to significantly deleteriously affect substantially most of the other advantageous properties of the copolyester-carbonate resin. Generally, a minimum of about 5 weight percent of the polycarbonate is sufficient to observe an improvement in processability of the copolyester-carbonate. A minimum of about 7 weight percent of the polycarbonate is preferred, while a minimum of about 10 weight percent is more preferred. A level of about 70 weight percent of the polycarbonate should generally not be exceeded,

preferably a level of about 60 weight percent, and more preferably a level of about 40 weight percent.

Weight percent is measured as the amount of polycarbonate present in the total of copolyester-carbonate and polycarbonate.

The composition of the instant invention may optionally have admixed therewith the commonly known and used additives such as, for example, antioxidants; mold release agents; inert fillers such as talc, clay, mica, glass fibers, and glass spheres; ultraviolet radiation absorbers such as the benzophenones, benzotriazoles, and cyanoacrylates; hydrolytic stabilizers such as the epoxides disclosed in U.S. Patent Nos. 3,489,716, 4,138,379 and 3,839,247, all of which are hereby incorporated herein by reference; color stabilizers such as the organophosphite disclosed in U.S. Patent Nos. 3,305,520 and 4,118, 370, both of which are hereby incorporated herein by reference; impact modifiers; and flame retardants.

Some particularly useful flame retardants are the alkali and alkaline earth metals salts of organic sulfonic acids. These types of flame retardants are disclosed, inter alia, in U.S. Patent Nos. 3,933,734, 3,948,851, 3,926,908, 3,919,167, 3,909,490, 3,953,396, 3,931,100, 3,978,024, 3,953,399, 3,917,559, 3,951,910 and 3,940,366, all of which are incorporated herein by refererence. These flame retardant compounds are present in amounts effective to render the instant compositions flame retardant. In general these amounts range from about 0.01 to about

10 weight percent, based on the total amount of flame retardant, copolyester-carbonate, and polycarbonate.

Another embodiment of the instant invention is a copolyester-carbonate resin derived from a carbonate precursor, at least one ester precursor, at least one dihydric phenol of Formula I, and at least one di(hydroxyaryl)sulfone of Formula II. This copolyester-carbonate resin will exhibit improved processability while simultaneously exhibiting good heat resistance, i.e., heat resistance generally comparable to unmodified copolyester-carbonate resins such as those derived from a carbonate precursor, at least one dihydric phenol, and at least one ester precursor. The copolyester-carbonates of this embodiment will generally have an ester content of from about 25 to about 90 mole percent and a carbonate content of from about 10 to about 75 mole percent, preferably an ester content of from about 35 to about 80 mole percent and a carbonate content of from about 20 to about 65 mole percent, more preferably an ester content of from about 70 to about 80 mole percent and a carbonate content of from about 20 to about 30 mole percent.

The amount of the di(hydroxyaryl)sulfone residue present in the carbonate component of the copolyester-carbonate resin will generally be from about 20 to about 80 mole percent, preferably from about 30 to about 70 mole percent, and more preferably from about 40 to about 60 mole percent. The carbonate component of these copolyester carbonates will thus generally be comprised of from about 20 to about 80 mole percent of the residue of a di(hydroxyaryl)sulfone of formula II, preferably the residue of a dixylenol sulfone such as bis(3,5-dimethyl-4-hydroxyphenyl)sulfone, and from about 80 to about 20 mole percent of the residue of a dihydric phenol of Formula I, preferably bisphenol A; preferably from about 30 to about 70 mole percent of the residue of a di(hydroxyaryl)sulfone of Formula II and from about 70 to about 30 mole percent of the residue of a dihydric phenol of Formula I; and more preferably from about 40 to about 60 mole percent of a residue of said di(hydroxyaryl)sulone and from about 60 to about 40 mole percent of a residue of said dihydric phenol. Mole percent of the residue of the di(hydroxyaryl)sulone residue present in the carbonate component is measured as the amount of said di(hydroxyaryl)sulfone residue present based on the total amounts of the di(hydroxyaryl)sulfone and dihydric phenol residues present in the carbonate component.

The carbonate precursor and the ester precursor utilized in the preparation of the copolyester-carbonate resins of this invention are generally of the type described hereinafore. Particularly useful ester precursors are those that provide copolyester-carbonates containing, as the ester component, at least about 90 mole percent isophthalate. Preferred ester precusors of this type are those that provide copolyester-carbonate containing a ester component comprised of from about 90 to about 98 mole percent isophthalate and from about 2 to about 10 mole percent terephthalate.

The copolyester-carbonate resin of this embodiment may be prepared by the conventional well known methods as set forth hereinafore.

Also included within the scope of this embodiment are the randomly branched copolyester-carbonates prepared by the reaction of a carbonate precursor, at least one ester precursor, at least one dihydric phenol of Formula I, at least one di(hydroxyaryl) sulfone of Formula II, and a minor amount of a branching agent of the type described hereinafore.

The copolyester-carbonate resin of this embodiment may optionally have admixed therewith the commonly known and used additives as described hereinafore, particularly the flame retardants and the impact modifiers.

DESCRIPTION OF THE PREFERRED EMBODIMENTS

In order that those skilled in the art may better understand how the instant invention is practiced the following examples are set forth. These examples are set forth by way of illustration and not by way of limitation. In the examples all parts and percentages are parts and percentages by weight, unless otherwise specified.

The following example illustrates a copolyester-carbonate falling outside the scope of the instant invention in that it does not contain any of the carbonate copolymer admixed therewith. This example is presented for comparative purposes only.

EXAMPLE 1

A copolyester-carbonate resin containing a 75 mole percent ester content, 100 mole percent of said ester content being isophthalate, and derived from the reaction of phosgene, bisphenol-A, and isophthaloyl dihalide, is fed to an extruder operating at a temperature of about 304°C. The extrudate is comminuted into pellets and the pellets are injection molded at about 347°C into test samples measuring 63.5mm x 12.7mm x 3.2mm thick.

The following examples illustrate copolyester-carbonate compositions of the instant invention.

EXAMPLE 2

A composition containing 90 parts by weight of a copolyester-carbonate resin of Example 1, and 10 parts by weight of a carbonate copolymer containing equal molar amounts of the residue of bisphenol-A and bis(3,5-dimethyl-4-hydroxyphenyl)sulfone, derived from bisphenol-A, bis(3,5-dimethyl-4-hydroxyphenyl) sulfone, and phosgene, was prepared by physically blending the ingredients together. The resulting mixture was fed to an extruder operating at a temperature of about 304°C. The extrudate was comminuted into pellets and the pellets were injection molded at about 347°C into test samples measuring 63.5mm x 12.7mm x 3.2mm thick.

EXAMPLE 3

The procedure of Example 2 was substantially repeated except that 80 parts by weight of the copolyester-carbonate resin of Example 1 and 20

parts by weight of the carbonate copolymer of Example 2 were used.

EXAMPLE 4

The procedure of Example 2 was substantially repeated except that 60 parts by weight of the copolyester-carbonate resin of Example 1 and 40 parts by weight of the carbonate copolymer of Example 2 were used.

The Heat Distortion Temperature Under Load (DTUL) of samples from Examples 1-4 was determined in accordance with ASTM D648, and the results are set forth in Table I.

Also determined for the resin mixtures from Examples 1-4 is the Kasha Index. The Kasha Index (KI) is an indication of the processability of the resin compositions. The lower the KI the greater the melt flow and, therefore, the better the processability of the composition. The Kasha Index is a measurement of the melt viscosity of the resinous compositions. The procedure for determining the Kasha Index is as follows: 7 grams of resinous pellets, dried a minimum of 90 minutes at 125°C, are added to a modified Tinius-Olsen model T3 melt indexer; the temperature in the indexer is maintained at 300°C and the resin is heated at this temperature for six minutes; after six minutes the resin is forced through a 0.04125 inch radius orifice using a plunger of radius of 0.1865 inch

and an applied force of 17.7 lbs.; the time required for the plunger to travel 2 inches is measured in centiseconds and this is reported as KI. The higher the KI the higher the melt viscosity of the resin and the more difficult it is to process.

The results of this test are also set forth in Table I.

0187999

TABLE I

| Example No. | KI | DTUL (°C) |
|---|---|---|
| 1 | 50,670 | 162.4 |
| 2 | 36,300 | 165.8 |
| 3 | 34,850 | 164.2 |
| 4 | 37,200 | 174.0 |

As illustrated by the data in Table I the compositions of the instant invention (Examples 2-4) exhibit a lower KI, and are therefore easier to process, than the control of Example 1. Furthermore, the heat resistance of the instant compositions, as indicated by the DTUL, is not in any way compromised relative to the control of Example 1.

The instant compositions are useful in the manufacture of molded articles, films and sheets.

The foregoing detailed description has been given for clearness of understanding only and no unnecessary limitations are to be understood therefrom. The invention is not limited to the exact details shown and described herein, for obvious modifications will occur to those skilled in the art.

WHAT IS CLAIMED IS:

1. A copolyester-carbonate composition exhibiting improved processability comprising, in physical admixture:

(i) at least one high molecular weight aromatic copolyester-carbonate resin wherein the ester component thereof is comprised of a major portion of isophthalate moieties; and

(ii) an amount effective to improve the processability of said copolyester-carbonate resin of at least one carbonate copolymer derived from

(a) at least one dihydric phenol,

(b) at least one di(hydroxyaryl)sulfone, and

(c) a carbonate precursor.

2. The composition of claim 1 which contains from about 3 to about 70 weight percent of said carbonate copolymer.

3. The composition of claim 2 which contains from about 5 to about 60 weight percent of said carbonate copolymer.

4. The composition of claim 3 which contains from about 7 to about 50 weight percent of said carbonate copolymer.

5. The composition of claim 1 wherein said ester component of said copolyester-carbonate is comprised of at least 60 mole percent isophthalate moities.

6. The composition of claim 5 wherein said ester component is comprised of at least about 70 mole percent isophthalate moieties.

7. The composition of claim 6 wherein said ester component is comprised of at least about 80 mole percent isophthalate moieties.

8. The composition of claim 7 wherein said ester component is comprised of at least about 90 mole percent isophthalate moieties.

9. The composition of claim 8 wherein said ester component is comprised of 100 mole percent isophthalate moities.

10. The composition of claim 1 wherein said copolyester-cacrbonate resin has an ester content of from about 70 to about 80 mole percent.

11. The composition of claim 1 wherein said di(hydroxyaryl)sulfone is represented by the general formula

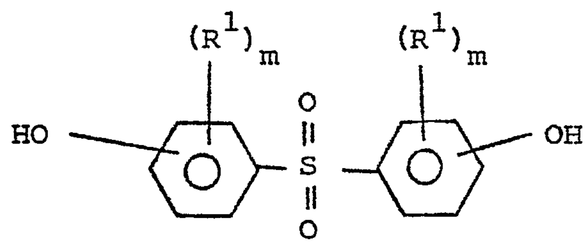

wherein:

$R^1$ is independently selected from halogen

radicals and monovalent hydrocarbon ardicals; and

m is independently selected from positive integers having a value of from 0 to 4 inclusive.

12. The composition of claim 11 wherein said monovalent hydrocarbon radicals represented by $R^1$ are selected from alkyl, cycloalkyl, aryl, aralkyl, and alkaryl radicals.

13. The composition of claim 12 wherein said monovalent hydrocarbon radicals are selected from alkyl radicals.

14. The composition of claim 13 wherein said alkyl radicals are methyl radicals.

15. The composition of claim 14 wherein each m is two.

16. The composition of claim 15 wherein said di(hydroxyaryl)sulfone is bis(3,5-dimethyl-4-hydroxyphenyl)sulfone.

17. The composition of claim 16 wherein said dihydric phenol is bisphenol-A.

18. The composition of claim 17 wherein said carbonate precursor is phosgene.

19. The composition of claim 18 wherein said copolyester-carbonate resin is derived from at least one dihydric phenol, at least one ester precursor, and a carbonate precursor.

20. The composition of claim 19 wherein said ester precursor is isophthaloyl dichloride.

21. The composition of claim 20 wherein said dihydric phenol is bisphenol-A.

22. The composition of claim 21 wherein said carbonate precursor is phosgene.

23. The composition of claim 22 wherein said copolyester-carbonate has an ester content of from about 70 to about 80 mole percent.

24. The composition of claim 1 which further contains a flame retardant amount of a flame retardant compound.

25. The composition of claim 24 wherein said flame retardant compound is selected from the alkali and alkaline earth metal salts of sulfonic acids.

26. A high molecular weight thermoplastic aromatic copolyester-carbonate resin exhibiting improved processability comprising the reaction products of:

(i) a carbonate precursor;

(ii) at least one ester precursor;

(iii) at least one dihydric phenol; and

(iv) at least one di(hydroxyaryl)sulfone.

27. The resin of claim 26 which contains from about 20 to about 80 mole percent of the residue of said di(hydroxyaryl)sulfone, based on the total amounts of the residues of said di(hydroxyaryl) sulfone and dihydric phenol present.

28. The resin of claim 27 which contains from about 30 to about 70 mole percent of said residue of said di(hydroxyaryl)sulfone.

29. The resin of claim 28 which contains from about 40 to about 60 mole percent of said residue of said di(hydroxyaryl)sulfone.

30. The resin of claim 26 wherein said di(hydroxyaryl)sulfone is represented by the general formula

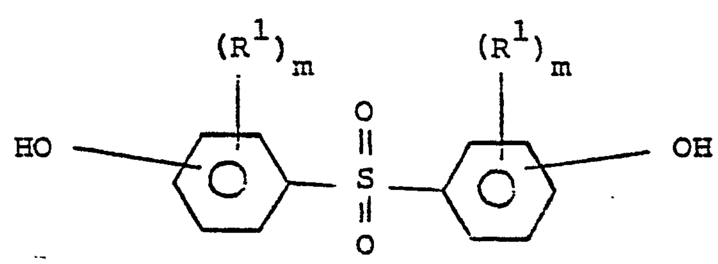

wherein:

$R^1$ is independently selected from halogen and

monovalent hydrocarbon radicals; and

m is independently selected from integers having a avlue of from 0 to 4 inclusive.

31. The resin of claim 30 wherein said monovalent hydrocarbon radicals are selected from alkyl, cycloalkyl, aryl, aralkyl and alkaryl radicals.

32. The resin of claim 31 wherein said monovalent hydrocarbon radicals are selected from alkyl radicals.

33. The resin of claim 32 wherein each m is two.

34. The resin of claim 33 wherein said alkyl radicals are methyl radicals.

35. The resin of claim 34 wherein said di(hydroxyaryl)sulfone is bis(3,5-dimethyl-4-hydroxyphenyl)sulfone.

36. The resin of claim 35 wherein said dihdyric phenol is bisphenol-A.

37. The resin of claim 36 wherein said ester precursor is isophthaloyl dichloride.

39. The resin of claim 38 which has an ester content of from about 70 to about 80 mole percent.

40. The resin of claim 35 wherein the major portion of the ester component of said copolyester-carbonate is comprised of isophthalate moieties.

41. The resin of claim 41 wherein said ester content contains at least about 60 mole percent isophthlate moieties.

42. The resin of claim 41 wherein said ester content is comprised of at least 70 mole percent isophthalate moieties.

43. The resin of claim 42 wherein said ester component is comprised of at least about 80 mole percent isophthalate moieties..

44. The resin of claim 43 wherein said ester component is comprised of at least about 90 mole percent isophthalate moieties.

45. The resin of claim 44 wherein said ester component is comprised of 100 mole percent isophthalate moieties.